(19) Europäisches Patentamt
European Patent Office
Office européen des brevets

(11) **EP 1 246 777 B1**

(12) **FASCICULE DE BREVET EUROPEEN**

(45) Date de publication et mention
de la délivrance du brevet:
**15.03.2006 Bulletin 2006/11**

(21) Numéro de dépôt: **00988862.9**

(22) Date de dépôt: **21.11.2000**

(51) Int Cl.:
*C01F 17/00* (2006.01)   *C01B 13/36* (2006.01)

(86) Numéro de dépôt international:
**PCT/FR2000/003228**

(87) Numéro de publication internationale:
**WO 2001/038225 (31.05.2001 Gazette 2001/22)**

(54) **DISPERSION COLLOIDALE AQUEUSE A BASE D'AU MOINS UN COMPOSE D'UN LANTHANIDE ET D'UN COMPLEXANT, PROCEDE DE PREPARATION ET UTILISATION**

WÄSSRIGE KOLLOIDALE DISPERSION AUF BASIS MINDESTENS EINES LANTHANIDS UND EINES KOMPLEXBILDNERS, VERFAHREN ZUR IHRER HERSTELLUNG UND VERWENDUNG

AQUEOUS COLLOIDAL DISPERSION BASED ON AT LEAST A LANTHANIDE COMPOUND AND A COMPLEX-FORMING AGENT, PREPARATION METHOD AND USE

(84) Etats contractants désignés:
**AT BE CH CY DE DK ES FI FR GB GR IE IT LI LU MC NL PT SE TR**

(30) Priorité: **23.11.1999 FR 9914728**

(43) Date de publication de la demande:
**09.10.2002 Bulletin 2002/41**

(73) Titulaire: **Rhodia Electronics and Catalysis
17041 La Rochelle Cedex (FR)**

(72) Inventeur: **CHANE-CHING, Jean-Yves
F-95600 Eaubonne (FR)**

(74) Mandataire: **Dubruc, Philippe et al
Rhodia Services,
Direction de la Propriété Industrielle,
40, rue de la Haie-Coq
93306 Aubervilliers Cedex (FR)**

(56) Documents cités:
**EP-A- 0 206 870       EP-A- 0 253 552
EP-A- 0 304 369       EP-A- 0 308 311
EP-A- 0 379 814       EP-A- 0 684 072
US-A- 5 545 386**

## Description

La présente invention concerne une dispersion colloïdale aqueuse à base d'au moins un composé d'un lanthanide et d'un complexant, son procédé de préparation et son utilisation.

Les sols de cérium, tout particulièrement les sols de cérium tétravalent, sont bien connus. Par ailleurs, les sols de lanthanides trivalents et notamment ceux de lanthane et d'yttrium trivalents, peuvent présenter un grand intérêt par exemple pour des applications en catalyse ou dans le domaine des luminophores. Cependant, dans ces applications, on a besoin de sols constitués de particules fines (nanométriques). Or, il est beaucoup plus difficile d'obtenir de tels sols avec des cations trivalents qu'avec des cations tétravalents. On observe, dans le cas des premiers, des cinétiques rapides de formation des particules ce qui entraîne des difficultés pour arrêter la polycondensation minérale au stade de particules nanométriques.

L'objet de l'invention est de résoudre de telles difficultés et donc d'obtenir des sols de lanthanides nanométriques.

Dans ce but, et selon un premier mode de réalisation, la dispersion colloïdale aqueuse de l'invention est une dispersion d'au moins un composé d'un lanthanide autre que le cérium ou d'au moins deux composés de lanthanide, l'un des lanthanides pouvant être le cérium et elle est caractérisée en ce qu'elle comprend un complexant présentant un pK (cologarithme de la constante de dissociation du complexe formé par le complexant et le cation lanthanide) supérieur à 2,5.

Selon un second mode de réalisation de l'invention, la dispersion colloïdale aqueuse de l'invention est une dispersion d'un composé du cérium et elle est caractérisée en ce qu'elle comprend un complexant présentant un pK (cologarithme de la constante de dissociation du complexe formé par le complexant et le cation cérium) supérieur à 2,5 et une taille moyenne des colloïdes d'au plus 6nm.

Les dispersions de l'invention peuvent comprendre en outre au moins un autre élément choisi parmi les groupes IVa, Va, VIa, VIIa, VIII, Ib et IIb de la classification périodique.

L'invention concerne aussi un procédé de préparation des dispersions précédentes qui est caractérisé en ce qu'il comporte les étapes suivantes :

- on forme un mélange aqueux comprenant au moins un sel du lanthanide et le complexant;
- on ajoute une base au mélange ainsi formé;
- on chauffe le mélange, ce par quoi on obtient une dispersion.

D'autres caractéristiques, détails et avantages de l'invention apparaîtront encore plus complètement à la lecture de la description qui va suivre, ainsi que des divers exemples concrets mais non limitatifs destinés à l'illustrer.

Par lanthanide, on entend dans la présente description les éléments du groupe constitué par l'yttrium et les éléments de la classification périodique de numéro atomique compris inclusivement entre 57 et 71. La présente invention s'applique tout particulièrement aux dispersions colloïdales pour lesquelles le ou les lanthanides sont sous forme trivalentes.

La classification périodique des éléments à laquelle il est fait référence est celle publiée dans le Supplément au Bulletin de la Société Chimique de France n° 1 (janvier 1966).

Par ailleurs, pour la suite de la description, l'expression dispersion colloïdale ou sol d'un composé d'un lanthanide ou d'un autre élément du type précité désigne tout système constitué de fines particules solides de dimensions colloïdales à base généralement d'oxyde et/ou d'oxyde hydraté (hydroxyde) du lanthanide ou; éventuellement, d'oxyde et/ou d'oxyde hydraté (hydroxyde) du lanthanide et de l'autre élément et à base aussi du complexant, en suspension dans une phase liquide aqueuse, lesdites espèces pouvant en outre, éventuellement, contenir des quantités résiduelles d'ions liés ou adsorbés tels que par exemple des nitrates, des acétates, des citrates, des ammoniums ou du complexant sous forme ionisée. On notera que dans de telles dispersions, le lanthanide ou l'autre élément peut se trouver soit totalement sous la forme de colloïdes, soit simultanément sous la forme d'ions, d'ions complexés et sous la forme de colloïdes.

Le terme complexant désigne dans la présente description un composé ou une molécule pouvant établir une liaison covalente ou iono-covalente avec le cation lanthanide et/ou le cation de l'autre élément: Les complexants qui conviennent dans le cadre de la présente invention sont des complexants à constante de dissociation de complexes Ks élevées, le complexe considéré ici étant le complexe formé par le complexant et le cation lanthanide ou, le cas échant, les complexes formés par le complexant et le lanthanide et le complexant et l'élément précité. A titre d'exemple pour l'équilibre donné ci-dessous :

$$(Ln,I)^{2+} \rightleftharpoons Ln^{3+} + I^-$$

dans lequel Ln désigne le lanthanide ou éventuellement un élément du type précité, I le complexant et $I^-$ l'anion complexant;

la constante de dissociation de complexes Ks est donnée par la formule :

$$Ks = [Ln^{3+}] \times [I^-] / [(Ln,I)^{2+}]$$

Le pK est le cologarithme de Ks. Plus le complexe $(Ln,I)^{2+}$ est stable, plus la valeur de pK est élevée.

Les complexants qui conviennent dans le cadre de la présente invention sont ceux présentant un pK supérieur à 2,5, de préférence d'au moins 3.

Le complexant peut être notamment choisi parmi les acides-alcools ou les polyacides-alcools ou leurs sels. Comme exemple d'acide-alcool, on peut citer l'acide glycolique ou l'acide lactique. Comme polyacide-alcool, on peut mentionner l'acide malique et l'acide citrique.

Le complexant peut aussi être choisi parmi les acides aliphatiques aminés, de préférence les polyacides aliphatiques aminés, ou leurs sels. Comme exemple d'un tel complexant, on peut donner l'acide éthylène-diamino-tétracétique ou l'acide nitrilo-tri-acétique ou encore le sel de sodium de l'acide glutamique N, N diacétique de formule $(NaCOO^-)CH_2CH_2-CH(COONa)N(CH_2COO^-Na)_2$.

Comme autres complexants convenables, on peut utiliser les acides polyacryliques et leurs sels comme le polyacrylate de sodium, et plus particulièrement ceux dont la masse moléculaire en poids est comprise entre 2000 et 5000.

On notera enfin qu'un ou plusieurs complexants peuvent être présents dans la même dispersion.

Le taux de complexant exprimé en nombre de moles de complexant par rapport au nombre de moles de lanthanide peut varier notamment entre 0,1 et 1,5, plus particulièrement entre 0,5 et 1,5. Ce taux est déterminé par dosage chimique du carbone et du lanthanide des colloïdes récupérés après ultracentrifugation à 50000t/mn pendant 6 heures. Un tel taux s'applique à la somme des complexants si plusieurs complexants sont présents dans la dispersion.

Dans le cas du premier mode de réalisation, la dispersion de l'invention est à base soit d'un seul composé d'un lanthanide qui dans ce cas est autre que le cérium, soit d'au moins deux composés de lanthanide, l'un des lanthanides pouvant être le cérium.

Le second mode de réalisation concerne une dispersion d'un composé de cérium et plus précisément, une dispersion ne comprenant, à titre de lanthanide, que du cérium. Cette dispersion comprend un complexant du même type que celui décrit pour le premier mode de réalisation.

Les dispersions de l'invention sont du type nanométrique. On entend par là des dispersions dont les colloïdes sont généralement d'une taille d'au plus 100nm, de préférence d'au plus 10nm.

Ainsi, dans le cas du second mode de réalisation, et à titre de variante particulière dans le cas du premier mode, les colloïdes des dispersions présentent une taille moyenne d'au plus 6nm. Cette taille moyenne peut être d'au plus 5nm plus particulièrement et peut être notamment comprise entre 2nm et 5nm.

Les diamètres précités sont déterminés par comptage photométrique à partir d'une analyse par METHR (Microscopie Electronique par Transmission à Haute Résolution), complétée si nécessaire par cryo-microscopie.

Outre leur faible taille, les colloïdes des dispersions de l'invention sont peu agrégés. Les analyses par cryo-microscopie électronique à transmission montrent un taux d'agrégats de colloïdes faible par exemple inférieur à 10% en nombre voire inférieur à 5% en nombre, c'est à dire que sur l'ensemble des objets que l'on observe au plus 10% sont constitués de plusieurs particules agrégées.

Les dispersions de l'invention peuvent présenter des valeurs de pH dans une gamme étendue, par exemple entre 5 et 10, plus particulièrement entre 7 et 9,5, ce qui permet de les utiliser notamment dans les applications où un pH voisin de la neutralité est requis.

D'autres modes de réalisation des dispersions de l'invention vont maintenant être décrits. Il est à noter ici que toutes les caractéristiques qui viennent d'être données plus haut s'appliquent aussi à ces modes.

Ainsi, les dispersions de l'invention peuvent comprendre des composés d'au moins deux lanthanides, par exemple il peut s'agir de dispersions à base d'yttrium et d'europium ou encore à base d'yttrium et de terbium.

On peut aussi mentionner des dispersions à base d'au moins un composé d'un lanthanide et qui comprennent en outre un composé d'au moins un élément choisi parmi les groupes IVa, Va. Vla, VIIa, VIII, Ib et Ilb de la classification périodique.

Dans le cas de la présence d'un élément précité, le rapport molaire lanthanide/(lanthanide+ autre élément) est d'au moins 50%.

Comme élément du groupe IVa, on peut citer plus particulièrement le titane et le zirconium.

A titre d'élément du groupe Va, on peut citer notamment le vanadium.

Le chrome et le molybdène peuvent être plus particulièrement choisis comme éléments du groupe VIa, et le manganèse pour le groupe VIIa.

Comme élément du groupe VIII, on peut citer plus particulièrement le fer, le cobalt et le nickel. Dans ce même groupe, on peut mentionner aussi les métaux précieux comme le platine, l'iridium, l'or, le ruthénium, le rhodium et le palladium.

Le cuivre, l'argent et le zinc peuvent être choisis pour les groupes Ib et Ilb respectivement.

Ainsi, on peut mentionner comme dispersions selon ce dernier mode de réalisation, celles à base de lanthane et de fer, de cérium et de titane, de cérium et de fer. Dans le cas des métaux précieux, on peut donner comme exemple les dispersions à base de lanthane et de platine ou celles à base de lanthane et de palladium.

On notera ici que pour les dispersions selon les modes de réalisation qui viennent d'être décrits, c'est à dire à base d'au moins deux lanthanides ou d'au moins un lanthanide et d'au moins un élément des groupes précités de la classification périodique, le taux de complexant exprimé en nombre de moles de complexant par rapport au nombre total de moles de l'ensemble des lanthanides et des éléments précités peut varier dans les mêmes proportions que celles données plus haut.

Les concentrations des dispersions de l'invention sont d'au moins 20g/l, elles peuvent être supérieures à 100g/l, concentrations exprimées en concentration équivalente en oxyde de lanthanide ou oxyde de lanthanide et oxyde du ou des éléments précités. La concentration est déterminée après séchage et calcination sous air d'un volume donné de dispersion.

Le mode de préparation des dispersions va maintenant être décrit.

La première étape du procédé de préparation consiste à former un mélange aqueux comprenant un sel du lanthanide et le complexant. Ce mélange peut comprendre en outre au moins un sel d'un élément des groupes cités plus haut dans le cas de la préparation des dispersions à base d'au moins un de ces éléments. Il est possible aussi de préparer un premier mélange avec un sel du lanthanide et un premier complexant et un second mélange avec l'élément précité et le même complexant ou un complexant différent.

Comme sel de lanthanide, on utilise généralement un sel trivalent.

Les sels peuvent être des sels d'acides inorganiques ou organiques, par exemple du type sulfate, nitrate, chlorure ou acétate. On notera que le nitrate et l'acétate conviennent particulièrement bien. Comme sels de cérium, on peut utiliser plus particulièrement t'acétate de cérium III, le chlorure de cérium III ou le nitrate de cérium III ou de cérium IV ainsi que des mélanges de ces sels comme des mixtes acétate/chlorure.

Dans le mélange de départ, le taux de complexant peut être compris entre 0,25 et 2.

La deuxième étape du procédé consiste à basifier le mélange ou les mélanges préparés précédemment. On y ajoute donc une base. Comme base, on peut utiliser notamment les produits du type hydroxyde. On peut citer les hydroxydes d'alcalins ou d'alcalino-terreux et l'ammoniaque. On peut aussi utiliser les amines secondaires. tertiaires ou quaternaires. Toutefois, les amines et l'ammoniaque peuvent être préférés dans la mesure où ils diminuent les risques de pollution par les cations alcalins ou alcalino terreux.

L'ajout de la base se fait jusqu'à l'obtention d'un pH dont la valeur varie en fonction de la nature du lanthanide et de la nature et du taux de complexant. Notamment, le pH est d'autant plus faible que le taux de complexant est élevé. On travaille généralement jusqu'à l'obtention d'un pH auquel on commence à observer la dissolution du précipité qui se forme dans la première partie de l'étape de basification. Dans le cas décrit plus haut et dans lequel on a préparé deux mélanges de départ, on réunit ces deux mélanges après basification et on ajuste le pH si nécessaire.

La troisième étape du procédé est un traitement thermique, aussi appelé thermohydrolyse, qui consiste à chauffer le mélange basifié obtenu à l'issue de l'étape précédente. La température de chauffage est d'au moins 60°C, de préférence d'au moins 100°C et elle peut aller jusqu'à la température critique du milieu réactionnel.

Ce traitement peut être conduit, selon les conditions de températures retenues, soit sous pression normale atmosphérique, soit sous pression telle que par exemple la pression de vapeur saturante correspondant à la température du traitement thermique. Lorsque la température de traitement est choisie supérieure à la température de reflux du mélange réactionnel (c'est à dire généralement supérieure à 100°C), on conduit alors l'opération en introduisant le mélange aqueux dans une enceinte close (réacteur fermé plus couramment appelé autoclave), la pression nécessaire ne résultant alors que du seul chauffage du milieu réactionnel (pression autogène). Dans les conditions de températures données ci-dessus, et en milieux aqueux, on peut ainsi préciser; à titre illustratif, que la pression dans le réacteur fermé varie entre une valeur supérieure à 1 Bar ($10^5$ Pa) et 165 Bar (165. $10^5$ Pa), de préférence entre 1 Bar (5. $10^5$ Pa) et 20 Bar (100. $10^5$ Pa). Il est bien entendu également possible d'exercer une pression extérieure qui s'ajoute alors à celle consécutive au chauffage.

Le chauffage peut être conduit soit sous atmosphère d'air, soit sous atmosphère de gaz inerte, de préférence l'azote.

La durée du traitement n'est pas critique, et peut ainsi varier dans de larges limites, par exemple entre 1 et 48 heures, de préférence entre 2 et 24 heures.

A l'issue du traitement, on obtient une dispersion selon l'invention.

Selon une variante de l'invention, la dispersion obtenue peut être traitée par ultrafiltration. Ce traitement peut avoir lieu immédiatement après l'étape précédente ou ultérieurement.

L'ultrafiltration peut se faire sous air ou dans une atmosphère d'air et d'azote ou encore sous azote. L'atmosphère sous laquelle se déroulent ces opérations joue un rôle dans la transformation du lanthanide III en lanthanide IV dans le cas des dispersions contenant un lanthanide pouvant être tri ou tétravalent. Elle se fait de préférence avec une eau ajustée au pH de la dispersion. Elle peut permettre de concentrer la dispersion.

Les dispersions de l'invention peuvent être utilisées dans de nombreuses applications. On peut citer la catalyse notamment pour post combustion automobile, dans ce cas les dispersion sont utilisées dans la préparation de catalyseurs. Les dispersions peuvent aussi être employées pour la lubrification, dans les céramiques, la fabrication de composés luminophores. Les dispersions peuvent aussi être mises en oeuvre pour leurs propriétés anti-UV par exemple dans là préparation de films de polymères (du type acrylique ou polycarbonate par exemple) ou de compositions cosmétiques notamment dans la préparation de crèmes anti-UV. Elles peuvent être utilisées enfin sur un substrat en tant qu'agents d'anticorrosion.

Des exemples vont maintenant être donnés.

EXEMPLE 1

Cet exemple concerne un dispersion colloïdale aqueuse de lanthane.

Dans un bécher,on additionne 105.9g de nitrate de lanthane à 2,36moles/kg (soit 0,25mole de La), puis 50g d'acide citrique (M = 192g), (soit 0,26moles d'acide citrique) et on complète à 500cm$^3$ par de l'eau déminéralisée. Après mise sous agitation, la solution est à un pH de 0,63. On additionne ensuite à l'aide d'une pompe doseuse 131cm$^3$ d'une solution d'ammoniaque 10,58M à une vitesse d'addition de 2ml/mn. Le pH est alors de 9,0.

On autoclave le mélange à 125°C (P= 1,6 bar) pendant 3h30 sous une agitation de 300tpm. Le produit présente un aspect laiteux. Après deux jours le produit devient moins opaque.

Le lavage est réalisé par ultrafiltration (membrane de 3KD) avec passage d'un volume d'eau égal à 1,5 fois le volume de dispersion initial (addition de 300cm$^3$ d'eau pour 200cm$^3$ de dispersion).. Après ce lavage par ultrafiltration, on recueille 200cm$^3$ de dispersion lavée, qui est dosée à 0,36 M en La.

Par cryo-microscopie électronique à transmission, on observe des colloïdes de taille de l'ordre de 3nm on n'observe pas de présence d'agrégats.

La dispersion présente un pH de 9,0.

Cette dispersion est ultracentrifugée à 50000tpm pendant 6 heures. Par dosage chimique du culot en La et en C, le rapport molaire acide citrique/La au sein des colloïdes est évalué à 0,8.

EXEMPLE 2

Cet exemple concerne une dispersion colloïdale aqueuse d'yttrium.

Dans un bécher, on additionne 38,3g de nitrate d'yttrium à 382.7g/mole (soit 0,1 mole de Y), puis 16g d'acide citrique (M = 192g), soit 0,08mole d'acide citrique et on complète à 200cm$^3$ par de l'eau déminéralisée (soit un rapport mole d'acide citrique/mole de Y de 0,83).

Après mise sous agitation d'une aliquote de 50 ml, on additionne ensuite à l'aide d'une pompe doseuse 9,8cm$^3$ d'une solution d'ammoniaque 10,00 M. Le pH est alors de 8,3.

On autoclave le mélange à 120°C (P= 1,6 bar) pendant une nuit en bombe de Parr. Le produit obtenu présente un aspect colloïdal.

La dispersion présente un pH de 8,3.

Par cryo-microscopie électronique à transmission, on observe des colloïdes de taille de l'ordre de 3nm.

Cette dispersion est ultracentrifugée à 50000t/mn pendant 6 heures. Pour une masse de dispersion colloïdale de 30,59 g , on recueille 3,49 g de colloïdes humides.

Par dosage chimique du culot en Y et en C, le rapport molaire acide citrique/Y au sein des colloïdes est évalué à 0,7.

EXEMPLE 3

Cet exemple concerne une dispersion colloïdale aqueuse mixte d'yttrium et d'europium.

On additionne dans un bécher 40,66 g de nitrate d'yttrium à 382,7 g/mole , 47,46 g de nitrate d'europium à 446,7 g/mole et 34 g d'acide citrique ($C_6H_8O_7$) et on complète à 425 cm par de l'eau déminéralisée. Le rapport molaire Y /Eu est égal à 1/1 et le rapport acide citrique / (Y+Eu) est égal à 0,83/1. L'ensemble est mis sous agitation.

On ajuste alors, sous agitation, à température ambiante et à débit constant, le pH à la valeur de 7,8 par ajout de 81 ml de $NH_4OH$ 10 M. On obtient environ 504 ml de dispersion.

On place la dispersion dans un autoclave Buchi (agitation 200 tours /mn) mis à 120°C pendant 6 heures. Après repos à température ambiante pendant 2 jours, on recueille une dispersion colloidale.

Par cryo-microscopie à transmission, on observe des colloides de taille de l'ordre de 3 nm, individualisés.

Par ultracentrifugation à 50000t/mn durant 6 heures, pour une masse de dispersion colloidale de 30,5 g, on recueille 4,1 g de colloides humides.

Le culot d'ultracentrifugation est dosés en Y et en Eu : le rapport molaire Y /Eu est égal à 1 /1,4.

EXEMPLE 4

Cet exemple concerne une dispersion colloïdale aqueuse à base de lanthane et de fer.

On incorpore 101 g de $Fe(NO_3)_3$, 9 $H_2O$ (soit 0,25 moles) et 105,94 g de $La(NO_3)_3$ à 2,36 mole/kg (soit 0,25 mole) dans un bécher. On se ramène à un volume de 715 cm par addition d'eau déminéralisée.

50 cm$^3$ de la solution précédemment préparée à 0,7 M en (La+Fe) sont additionnés dans un bécher dans lequel on a préalablement incorporé 6,1 g 'd'acide citrique ($C_6H_8O_7$, $H_2O$) soit 0,029 moles d'acide citrique et un rapport acide citrique/métal de 0,8311. L'ensemble est mis sous agitation .

On additionne sous agitation, à température ambiante, à débit controlé,* une solution d'ammoniaque 10 M jusqu'à pH 6,3.

La dispersion obtenue est mise en autoclave en bombe de Parr une nuit à 120°C.

On recueille une dispersion colloidaie .

Par cryo-microscopie electronique à transmission, on observe des colloides parfaitement individualisés de taille d'environ 3 nm.

Après ultracentrifugation à 50000 t/ mn pendant 6 heures, on recueille un culot d'ultracentrifugation. Le dosage chimique du culot montre que les colloides présentent un rapport La/Fe de 1 en mole et un rapport acide citrique / (La+Fe) molaire de 0,65.

EXEMPLE 5

Cet exemple concerne aussi une dispersion colloïdale aqueuse à base de lanthane et de fer mais avec deux complexants.

On prépare une solution A de nitrate ferrique en présence d'un complexant qui est le sel de sodium de l'acide glutamique N, N diacétique d'appellation commerciale (Nervanaid GBS 5) vendu par Rhodia. Ainsi, 20,2 g de Fe(NO$_3$)$_3$, 9 H$_2$O sont incorporés dans un bécher; addition de 35,5 ml de solution de GBS à 1,41 M et on complète à 100 ml par de l'eau déminéralisée. Après mise sous agitation, le pH de la solution est de 3,88 et la solution est à 0,5 M en Fe et 0,5 M en complexant GBS. On additionne ensuite sous agitation à l'aide d'une pompe 3,97 ml d'une solution d'ammoniaque 10 M Le pH de la dispersion est de 8,0.

On prépare une solution B de nitrate ferrique en présence de complexant citrate. Ainsi. 21,2 g de La (NO$_3$)$_3$ sont incorporés dans un bécher, on ajoute 9,6 g d'acide citrique et on complète à 100 ml par de l'eau déminéralisée. Après mise sous agitation, le pH de la solution est de 0,5. La solution est à 0,5 M en La et à 0,5 M en citrate. On additionne ensuite, sous agitation, à l'aide d'une pompe 18 ml d'une solution d'ammoniaque 10 M. Le pH de la dispersion est de 8,0.

On mélange sous agitation 50 ml de la solution A et 50 ml de la solution B. Le pH est de 6,4. On ajuste à pH 8,0 par 1,79 ml d'ammoniaque 10 M: Le milieu obtenu est autoclavé à 120°C une nuit.

La dispersion colloidale obtenue est de couleur rouge noire.

Par ultracentrifugation à 50000 t/mn durant 6 heures, on recueille un culot. Par dosage chimique, on determine un rapport La/Fe de 110,66 en moles pour les colloides.

Par cryo-microscopie electronique à transmission, on visualise des particules bien individualisées de diamètre d'environ 3 nm.

EXEMPLE 6

Cet exemple concentre une dispersion colloïdale aqueuse à base de lanthane et de palladium.

Dans un bécher, on dissous 33 g de sel La (NO$_3$)$_3$ solide à 2,36 M/Kg et 15,62 g d'acide citrique jusqu'à un volume final de 156 cm$^3$ par de l'eau déminéralisée. Le pH est alors de 0,56. On additionne alors à température ambiante 49 cm$^3$ de NH$_4$OH concentrée 10,5 M pour obtenir un pH de 9.

On ajoute ensuite 30 cm$^3$ d'une solution de Pd (NO$_3$)$_2$ à 10% Pd(NO$_3$)$_2$ ou 0,43 M en Pd. Le pH est alors de 6,17. Par addition de 29 cm$^3$ de NH$_4$OH, on obtient un pH de 9,0. On rajoute 103 g d'eau permutée. Le rapport atomique La/ Pd est égal à 1/0,16.

Cette solution est mise à l'étuve à 107°C en autoclave Buchi fermé durant 6 heures; on obtient une dispersion. On laisse évoluer la dispersion 2 jours vers une solution colloidale d'aspect limpide à l'oeil à température ambiante avant ultrafiltration.

345 ml de la solution colloidale ainsi préparées sont mises à ultrafiltrer dans une cellule d'ultrafiltration équipée d'une membrane de 3KD, sous une pression de 3 bars. La solution est lavée à l'aide d'un volume global de 450 cm$^3$ d'eau déminéralisée. L'ultrafiltration est effectuée jusqu'à un volume de solution coiloidaie final de 175 cm$^3$. Le dosage de la solution colloidale indique des concentrations en La de 0,245 M et de 0,015 M en Pd.

4 g de solution colloidale ultrafiltrée sont mis à centrifuger à 50000 t / mn durant 6 heures.

Par cryo-microscopie electronique à transmission, on visualise des particules bien individualisées de diamètre d'environ 3 nm.

Le rapport atomique La/Pd déterminé dans les colloides par dosage chimique des colloides récupérés par ultracentrifugation est La/Pd = 1/0,06.

EXEMPLE 7

Cet exemple concerne une dispersion de cérium.

On incorpore dans un bécher 34,9 g d'acétate de cérium (III) à 49,29% en CeO$_2$ 28,8 g d'acide citrique et 200 g d'eau déminéralisée . L'ensemble est mis sous agitation. Le rapport molaire acide citrique/cérium est 1,5/1. Le volume de la solution finale est de 235 cm$^3$.

On additionne à 0,3 ml/mn une solution d'ammoniaque concentrée 10,4 M jusqu'à obtenir un pH de 7,5.

La dispersion est autoclavée à 120°C pendant une nuit .On obtient une dispersion colloidale.

Après refroidissement d'environ 3 heures, la dispersion est lavée par de l'eau déminéralisée et concentrée par ultrafiltration sur une membrane de 3 KD. Une évolution de la coloration est observée lors du lavage . 120 ml de dispersion sont ainsi lavés par 6 fois leur volume d'eau . On recueille en fin de lavage 60 ml.

Par ultracentrifugation à 50000 t/ mn pendant 6 heures, on recueille un culot confirmant l'aspect colloidal de la dispersion.

Par cryo- microscopie electronique à transmission, on visualise des particules bien individualisées de diamètre d'environ 3 nm.

**Revendications**

1. Dispersion colloïdale aqueuse d'au moins un composé d'un lanthanide autre que le cérium ou d'au moins deux composés de lanthanide, l'un des lanthanides pouvant être le cérium, **caractérisée en ce qu'**elle comprend un complexant présentant un pK (cologarithme de la constante de dissociation du complexe formé par le complexant et le cation lanthanide) supérieur à 2,5.

**2.** Dispersion colloïdale aqueuse d'un composé du cérium, **caractérisée en ce qu'**elle comprend un complexant présentant un pK (cologarithme de la constante de dissociation du complexe formé par le complexant et le cation cérium) supérieur à 2,5 et une taille moyenne des colloïdes d'au plus 6nm.

**3.** Dispersion selon la revendication 1 ou 2, **caractérisée en ce que** les particules colloïdales présentent une taille moyenne comprise entre 2 et 5nm.

**4.** Dispersion selon .l'une des revendications précédentes, **caractérisée en ce que** le complexant est choisi parmi les acides- ou polyacides-alcools, les acides aliphatiques aminés, les acides polyacryliques ou les sels de ceux-ci.

**5.** Dispersion selon l'une des revendications précédentes, **caractérisée en ce qu'**elle présente un pH compris entre 5 et 10.

**6.** - Dispersion selon l'une des revendications précédentes, **caractérisée en ce qu'**elle comprend un complexant présentant un pK d'au moins 3.

**7.** Dispersion selon l'une des revendications précédentes, **caractérisée en ce qu'**elle comprend un composé d'au moins un élément supplémentaire choisi parmi les groupes IVa, Va, VIa, VIIa, VIII, Ib et IIb de la classification périodique.

**8.** Dispersion selon l'une des revendications précédentes, **caractérisée en ce que** le taux de complexant exprimé en nombre de moles de complexant par rapport au nombre de moles de lanthanide et, éventuellement, de moles d'élément supplémentaire précité, est compris entre 0,1 et 1,5.

**9.** Dispersion selon l'une des revendications précédentes, **caractérisée en ce que** le ou les lanthanides sont des lanthanides trivalents, plus particulièrement le lanthane ou l'yttrium.

**10.** Procédé de préparation d'une dispersion selon l'une des revendications précédentes, **caractérisé en ce qu'**il comporte les étapes suivantes :

- on forme un mélange aqueux comprenant au moins un sel du lanthanide, un sel d'un élément supplémentaire précité le cas échéant, et le complexant;
- on ajoute une base au mélange ainsi formé;
- on chauffe le mélange, ce par quoi on obtient la dispersion.

**11.** Procédé de préparation d'une dispersion comprenant un élément supplémentaire précité selon la revendication 7, **caractérisé en ce qu'**il comporte les étapes suivantes :

- on forme un premier mélange avec un sel du lanthanide et un premier complexant et un second mélange avec un élément supplémentaire précité et le même complexant ou un complexant différent;
- on ajoute une base à chacun des mélanges ainsi formés;
- on réunit les deux mélanges;
- on chauffe les deux mélanges réunis, ce par quoi on obtient la dispersion.

**12.** Procédé selon la revendication 10 ou 11, **caractérisé en ce qu'**on chauffe à une température d'au moins 60°C, de préférence d'au moins 100°C.

**13.** Procédé selon l'une des revendications 10, 11 ou 12, **caractérisé en ce qu'**on soumet la dispersion obtenue à l'issue de l'étape de chauffage à un traitement d'ultrafiltration.

**14.** Utilisation d'une dispersion du type selon l'une des revendications 1 à 9 ou du type obtenu par le procédé selon l'une des revendications 10 à 13, sur un substrat comme agent anticorrosion, dans la préparation de films de polymères, dans une composition cosmétique, en catalyse notamment pour post combustion automobile, en lubrification ou dans les céramiques.

**Patentansprüche**

**1.** Wässrige kolloidale Dispersion wenigstens einer Verbindung eines Lanthanids, das von Cer verschieden ist, oder wenigstens zweier Lanthanidverbindungen, wobei eines der Lanthanide Cer sein kann, **dadurch gekennzeichnet, dass** sie einen Komplexbildner umfasst, der einen pK (negativer Logarithmus der Dissoziationskonstante des von dem Komplexbildner und dem Lanthanidkation gebildeten Komplexes) größer als 2,5 aufweist.

**2.** Wässrige kolloidale Dispersion einer Cerverbindung, **dadurch gekennzeichnet, dass** sie einen Komplexbildner, der einen pK (negativer Logarithmus der Dissoziationskonstante des von dem Komplexbildner und dem Cerkation gebildeten Komplexes) größer als 2,5 aufweist, und eine mittlere Größe der Kolloide von höchstens 6 nm umfasst.

**3.** Dispersion gemäß Anspruch 1 oder 2, **dadurch gekennzeichnet, dass** die kolloidalen Teilchen eine mittlere Größe zwischen 2 und 5 nm aufweisen.

**4.** Dispersion gemäß einem der vorhergehenden Ansprüche, **dadurch gekennzeichnet, dass** der Komplexbildner ausgewählt ist unter den Säure- oder Polysäurealkoholen, den aliphatischen Aminosäuren, den Polyacrylsäuren oder deren Salzen.

5. Dispersion gemäß einem der vorhergehenden Ansprüche, **dadurch gekennzeichnet, dass** sie einen pH zwischen 5 und 10 aufweist.

6. Dispersion gemäß einem der vorhergehenden Ansprüche, **dadurch gekennzeichnet, dass** sie einen Komplexbildner umfasst, der einen pK von wenigstens 3 aufweist.

7. Dispersion gemäß einem der vorhergehenden Ansprüche, **dadurch gekennzeichnet, dass** sie eine Verbindung von wenigstens einem zusätzlichen Element umfasst, das ausgewählt ist aus den Gruppen IVa, Va, VIa, VIIa, VIII, Ib und IIb des Periodensystems.

8. Dispersion gemäß einem der vorhergehenden Ansprüche, **dadurch gekennzeichnet, dass** der Gehalt an Komplexbildner, ausgedrückt in Anzahl an Molen Komplexbildner bezogen auf die Anzahl an Molen Lanthanid und gegebenenfalls an Molen zuvor genannten zusätzlichem Element, zwischen 0,1 und 1,5 liegt.

9. Dispersion gemäß einem der vorhergehenden Ansprüche, **dadurch gekennzeichnet, dass** das oder die Lanthanide dreiwertige Lanthanide sind, spezieller Lanthan oder Yttrium.

10. Verfahren zur Herstellung einer Dispersion gemäß einem der vorhergehenden Ansprüche, **dadurch gekennzeichnet, dass** es die folgenden Schritte umfasst:

    - man bildet ein wässriges Gemisch, das wenigstens ein Salz des Lanthanids, gegebenenfalls ein Salz eines zuvor genannten zusätzlichen Elements und den Komplexbildner umfasst;
    - man fügt zu dem so gebildeten Gemisch eine Base hinzu;
    - man erhitzt das Gemisch, wodurch man die Dispersion erhält.

11. Verfahren zur Herstellung einer Dispersion, die ein zuvor angeführtes zusätzliches Element gemäß Anspruch 7 umfasst, **dadurch gekennzeichnet, dass** es die folgenden Schritte umfasst:

    - man bildet ein erstes Gemisch mit einem Salz des Lanthanids und einem ersten Komplexbildner und ein zweites Gemisch mit einem zuvor angeführten zusätzlichen Element und dem gleichen Komplexbildner oder einem anderen Komplexbildner;

    - man fügt eine Base zu jedem der so gebildeten Gemische hinzu;
    - man vereinigt die beiden Gemische;
    - man erhitzt die beiden vereinigten Gemische, wodurch man die Dispersion erhält.

12. Verfahren gemäß Anspruch 10 oder 11, **dadurch gekennzeichnet, dass** man auf eine Temperatur von wenigstens 60 °C, vorzugsweise von wenigstens 100 °C erhitzt.

13. Verfahren gemäß einem der Ansprüche 10, 11 oder 12, **dadurch gekennzeichnet, dass** man die am Ende des Schritts zum Erhitzen erhaltene Dispersion einer Ultrafiltrationsbehandlung unterzieht.

14. Verwendung einer Dispersion des Typs gemäß einem der Ansprüche 1 bis 9 oder des Typs, der durch das Verfahren gemäß einem der Ansprüche 10 bis 13 erhalten wird, auf einem Substrat als Korrosionsschutzmittel, bei der Herstellung von Polymerfilmen, in einer kosmetischen Zusammensetzung, in der Katalyse insbesondere für die Nachverbrennung im Automobil, bei der Schmierung oder in Keramiken.

**Claims**

1. Aqueous colloidal dispersion of at least one compound of a lanthanide other than cerium or of at least two lanthanide compounds, it being possible for one of the lanthanides to be cerium, **characterized in that** it comprises a complexing agent exhibiting a pK (cologarithm of the dissociation constant of the complex formed by the complexing agent and the lanthanide cation) of greater than 2.5.

2. Aqueous colloidal dispersion of a cerium compound, **characterized in that** it comprises a complexing agent exhibiting a pK (cologarithm of the dissociation constant of the complex formed by the complexing agent and the cerium cation) of greater than 2.5 and a mean size of the colloids of at most 6 nm.

3. Dispersion according to Claim 1 or 2, **characterized in that** the colloidal particles exhibit a mean size of between 2 and 5 nm.

4. Dispersion according to one of the preceding claims, **characterized in that** the complexing agent is chosen from acid alcohols or polyacid alcohols, aliphatic amino acids, polyacrylic acids or the salts of these.

5. Dispersion according to one of the preceding claims, **characterized in that** it exhibits a pH of between 5 and 10.

6. Dispersion according to one of the preceding claims, **characterized in that** it comprises a complexing agent exhibiting a pK of at least 3.

7. Dispersion according to one of the preceding claims, **characterized in that** it comprises a compound of at least one additional element chosen from Groups IVa, Va, VIa, VIIa, VIII, Ib and IIb of the Periodic Table.

8. Dispersion according to one of the preceding claims, **characterized in that** the level of complexing agent, expressed as number of moles of complexing agent with respect to the number of moles of lanthanide and optionally of moles of abovementioned additional element, is between 0.1 and 1.5.

9. Dispersion according to one of the preceding claims, **characterized in that** the lanthanide or lanthanides are trivalent lanthanides, more particularly lanthanum or yttrium.

10. Process for the preparation of a dispersion according to one of the preceding claims, **characterized in that** it comprises the following stages:

    - an aqueous mixture comprising at least one salt of the lanthanide, one salt of an abovementioned additional element, if appropriate, and the complexing agent is formed;
    - a base is added to the mixture thus formed;
    - the mixture is heated, whereby the dispersion is obtained.

11. Process for the preparation of a dispersion comprising an abovementioned additional element according to Claim 7, **characterized in that** it comprises the following stages:-

    - a first mixture with a salt of the lanthanide and a first complexing agent is formed and a second mixture with a salt of the abovementioned additional element and the same complexing agent or a different complexing agent is formed;
    - a base is added to each of the mixtures thus formed;
    - the two mixtures are combined;
    - the two combined mixtures are heated, whereby the dispersion is obtained.

12. Process according to Claim 10 or 11, **characterized in that** heating is carried out at a temperature of at least 60°C, preferably of at least 100°C.

13. Process according to one of Claims 10, 11 or 12, **characterized in that** the dispersion obtained on conclusion of the heating stage is subjected to an ultrafiltration treatment.

14. Use of a dispersion of the type according to one of Claims 1 to 9 or of the type obtained by the process according to one of Claims 10 to 13, on a substrate as corrosion inhibitor, in the preparation of polymer films, in a cosmetic composition, in catalysis, in particular for automobile afterburning, in lubrication or in ceramics.